(19) Europäisches Patentamt
European Patent Office
Office européen des brevets

(11) **EP 4 213 076 A1**

(12) **EUROPEAN PATENT APPLICATION**

(43) Date of publication:
**19.07.2023 Bulletin 2023/29**

(21) Application number: **22216350.3**

(22) Date of filing: **23.12.2022**

(51) International Patent Classification (IPC):
*G06N 3/09* (2023.01)      *G06N 5/01* (2023.01)
*G06F 3/16* (2006.01)      *G10L 15/08* (2006.01)
*G10L 25/51* (2013.01)

(52) Cooperative Patent Classification (CPC):
**G06F 3/167; G06N 3/09; G06N 5/01; G10L 15/08;
G10L 25/51**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2022  FI 20225025**

(71) Applicant: **Nokia Technologies Oy
02610 Espoo (FI)**

(72) Inventors:
• **TOUSSAINT, Wiebke
Voorburg (NL)**
• **MATHUR, Akhil
London (GB)**
• **KAWSAR, Fahim
Cambridge (GB)**

(74) Representative: **Nokia EPO representatives
Nokia Technologies Oy
Karakaari 7
02610 Espoo (FI)**

(54) **UPDATING CLASSIFIERS**

(57)    Example embodiments may relate to an apparatus, method and/or computer program for the updating, or tuning, of classifiers. For example, the method may comprise receiving data indicative of a positive or negative classification based on comparing an output value, generated by a computational model responsive to an input data, with a threshold value which divides a range of output values of the computational model into positive and negative classes of output values. A positive or a negative classification may be usable by the apparatus, or another apparatus, to trigger one or more processing operations. Other operations may comprise determining that the positive or negative classification is a false classification based on one or more events detected subsequent to generation of the output value and updating the threshold value responsive to determining that the positive or negative classification is a false classification.

**Description**

**Field**

Example embodiments may relate to an apparatus, method and/or computer program for the updating, or tuning, of classifiers, for example classifiers which include a computational model and which provide at least a positive or negative output in response to input data.

**Background**

A classifier may comprise a computational system, or part thereof, which may include a computational model such as a trained machine learning model, e.g. a neural network. The computational model may be a predictive model, i.e. one which receives input data and generates therefrom an output value representing a prediction that the input data falls within either a positive or negative class. This output value may be classified as a positive or negative class based on a threshold value with which the output value is compared. This threshold value may be predefined at the time of provisioning the classifier to an end-user. Classifying the input data to a positive class may result in some further processing operations related to an intended task of the classifier. For example, a voice-activated digital assistant may comprise a classifier for determining whether a received voice utterance includes a wake command. The input data may comprise a digital representation of the received utterance and a predictive model may be used to output a value which is compared with the threshold value to determine if the utterance comprises the wake word, i.e. a positive classification, or does not, i.e. a negative classification. If a positive classification, one or more other processing operations may be performed, e.g. performing queries or tasks based on one or more other words in the utterance, or a subsequent utterance.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising: means for receiving data indicative of a positive or negative classification based on comparing an output value, generated by a computational model responsive to an input data, with a threshold value which divides a range of output values of the computational model into positive and negative classes of output values, a positive or a negative classification being usable by the apparatus, or another apparatus, to trigger one or more processing operations; means for determining that the positive or negative classification is a false classification based on one or more events detected subsequent to generation of the output value; and means for updating the threshold value responsive to determining that the positive or negative classification is a false classification.

The means for determining a false classification may be configured to determine the false classification based on feedback data indicative of the one or more events detected subsequent to generation of the output value.

Responsive to a positive classification, a false classification may be determined based on the feedback data indicating a negative classification event associated with one or more further classification processes triggered by the positive classification.

Responsive to a positive classification, a false classification may be determined based on the feedback data indicating a negative interaction event associated with the computational model.

A negative interaction event may be indicated by the feedback data if no input data, or input data below a predetermined threshold, is received by the computational model within a predetermined time period subsequent to generation of the output value.

Responsive to a negative classification, a false classification may be determined based on the feedback data indicating a repeat interaction event associated with the computational model.

A repeat interaction event may be indicated by the feedback data if the computational model receives the same or similar input data to the previous input data within a predetermined time period subsequent to generation of the output value.

The updating means may be configured such that: for a false positive classification, the updated threshold value has a value within the positive class of output values; or for a false negative classification, the updated threshold value has a value within the negative class of output values.

The updating means may be configured to modify the threshold value by a predetermined amount d within the respective positive or negative classes of output values and to use the modified threshold value as the updated threshold value if the modified threshold value satisfies a predetermined rule.

The predetermined rule may be satisfied if:

for a false positive classification:

$$(\text{FN tolerance value} - k) * (\text{FN tolerance value} - \text{modified threshold value}),$$

or
for a false negative classification

$$(\text{FP tolerance value} - k) * (\text{FP tolerance value} - \text{modified threshold value})$$

is a positive value, where FN tolerance value is a predefined first tolerance value within the positive class of output values, FP tolerance value is a predefined second tolerance value within the negative class of output values and $k$ is the threshold value.

The updating means may be configured, responsive to the predetermined rule not being satisfied: for a false positive classification, to use FN tolerance value as the updated threshold value; or for a false negative classification, to use FP tolerance value as the updated threshold.

The predetermined amount $d$ may be dynamically changeable based, at least in part, on the generated output value of the computational model.

The predetermined amount $d$ may be dynamically changeable based, at least in part, on the difference between the threshold value and the generated output value of the computational model.

The predetermined amount d may be dynamically changeable as:

$$d = \frac{|k - c|}{n}$$

where $k$ is the threshold value, $c$ is the generated output value of the computational model and $n$ is a positive value.

The apparatus may comprise at least part of a digital assistant, wherein the computational model is configured to receive input data representing a user utterance and/or gesture and to generate an output value indicative of whether the utterance and/or gesture corresponds to a wakeup command for the digital assistant, a positive classification being usable to trigger one or more processing operations for performance by the digital assistant.

The one or more processing operations may comprise one or more of: responding to a query received after the wakeup command; and controlling a remote electronic system in communication with the digital assistant.

The apparatus may comprise the computational model and one or more sensors for providing the input data to the computational model.

The means may comprise: at least one processor; and at least one memory including computer program code, the at least one memory and computer program code configured to, with the at least one processor, cause the performance of the apparatus.

According to a second aspect, there is described a method comprising: receiving data indicative of a positive or negative classification based on comparing an output value, generated by a computational model responsive to an input data, with a threshold value which divides a range of output values of the computational model into positive and negative classes of output values, a positive or negative classification being usable by the apparatus, or another apparatus, to trigger one or more processing operations; determining that the positive or negative classification is a false classification based on one or more events detected subsequent to generation of the output value; and updating the threshold value responsive to determining that the positive or negative classification is a false classification.

Determining a false classification may be based on feedback data indicative of the one or more events detected subsequent to generation of the output value.

Responsive to a positive classification, a false classification may be determined based on the feedback data indicating a negative classification event associated with one or more further classification processes triggered by the positive classification.

Responsive to a positive classification, a false classification may be determined based on the feedback data indicating a negative interaction event associated with the computational model.

A negative interaction event may be indicated by the feedback data if no input data, or input data below a predetermined threshold, is received by the computational model within a predetermined time period subsequent to generation of the output value.

Responsive to a negative classification, a false classification may be determined based on the feedback data indicating a repeat interaction event associated with the computational model.

A repeat interaction event may be indicated by the feedback data if the computational model receives the same or similar input data to the previous input data within a predetermined time period subsequent to generation of the output value.

The updating may be such that: for a false positive classification, the updated threshold value has a value within the positive class of output values; or for a false negative classification, the updated threshold value has a value within the negative class of output values.

The updating may modify the threshold value by a predetermined amount *d* within the respective positive or negative classes of output values and to use the modified threshold value as the updated threshold value if the modified threshold value satisfies a predetermined rule.

The predetermined rule may be satisfied if:

for a false positive classification:

$$(\text{FN tolerance value} - k) * (\text{FN tolerance value} - \text{modified threshold value}),$$

or

for a false negative classification

$$(\text{FP tolerance value} - k) * (\text{FP tolerance value} - \text{modified threshold value})$$

is a positive value, where FN tolerance value is a predefined first tolerance value within the positive class of output values, FP tolerance value is a predefined second tolerance value within the negative class of output values and *k* is the threshold value.

The updating may be such that, responsive to the predetermined rule not being satisfied: for a false positive classification, to use FN tolerance value as the updated threshold value; or for a false negative classification, to use FP tolerance value as the updated threshold.

The predetermined amount *d* may be dynamically changeable based, at least in part, on the generated output value of the computational model.

The predetermined amount *d* may be dynamically changeable based, at least in part, on the difference between the threshold value and the generated output value of the computational model.

The predetermined amount *d* may be dynamically changeable as:

$$d = \frac{|k - c|}{n}$$

where *k* is the threshold value, *c* is the generated output value of the computational model and *n* is a positive value.

The method may be performed by at least part of a digital assistant, wherein the computational model is configured to receive input data representing a user utterance and/or gesture and to generate an output value indicative of whether the utterance and/or gesture corresponds to a wakeup command for the digital assistant, a positive classification being usable to trigger one or more processing operations for performance by the digital assistant.

The one or more processing operations may comprise one or more of: responding to a query received after the wakeup command; and controlling a remote electronic system in communication with the digital assistant.

According to a third aspect, there is provided a computer program product comprising a set of instructions which, when executed on an apparatus, is configured to cause the apparatus to carry out the method of any preceding method definition.

According to a fourth aspect, there is provided a non-transitory computer readable medium comprising program instructions stored thereon for performing a method, comprising: receiving data indicative of a positive or negative classification based on comparing an output value, generated by a computational model responsive to an input data, with a threshold value which divides a range of output values of the computational model into positive and negative classes of output values, a positive or negative classification being usable by the apparatus, or another apparatus, to trigger one or more processing operations; determining that the positive or negative classification is a false classification based on one or more events detected subsequent to generation of the output value; and updating the threshold value responsive to determining that the positive or negative classification is a false classification.

The program instructions of the fourth aspect may also perform operations according to any preceding method definition of the second aspect.

According to a fifth aspect, there is provided an apparatus comprising: at least one processor; and at least one memory including computer program code which, when executed by the at least one processor, causes the apparatus to: receive data indicative of a positive or negative classification based on comparing an output value, generated by a computational model responsive to an input data, with a threshold value which divides a range of output values of the computational model into positive and negative classes of output values, a positive or negative classification being usable by the apparatus, or another apparatus, to trigger one or more processing operations; determine that the positive or negative classification is a false classification based on one or more events detected subsequent to generation of the output value; and update the threshold value responsive to determining that the positive or negative classification is a false classification.

The computer program code of the fifth aspect may also perform operations according to any preceding method definition of the second aspect.

**Brief Description of the Drawings**

Example embodiments will now be described by way of non-limiting example, with reference to the accompanying drawings, in which:

FIG. 1 is a block diagram showing an example architecture of a classifier;
FIG. 2 is a graph indicative of probability distributions of positive and negative classes for the FIG. 1 classifier;
FIG. 3 is a flow diagram showing processing operations according to example embodiments;
FIG. 4 is a block diagram showing an example architecture of a classifier according to example embodiments;
FIG. 5 is a flow diagram showing other processing operations according to at least some example embodiments;
FIG. 6 is a graph indicative of probability distributions of positive and negative classes for the FIG. 4 classifier and the updating of a threshold value according to at least some example embodiments;
FIG. 7 is a block diagram of an apparatus which may implement at least some example embodiments; and
FIG. 8 is a plan view of a non-transitory storage medium on which computer-readable code may be stored and which, when executed, may perform processing operations according to at least some example embodiments.

**Detailed Description**

Example embodiments may relate to apparatuses, methods and/or computer programs for the updating, or tuning, of classifiers.

As mentioned above, a classifier may comprise a computational apparatus, part of a computational apparatus, or part of a network of computational apparatuses which may include a predictive model such as a machine learning model, e.g. a neural network or related model. The predictive model may receive input data and may generate therefrom, usually by means of an algorithm, an output value representing a prediction that the input data falls within at least a positive or negative class. This output value may be classified as a positive or negative class based on a threshold value with which the output value is compared. Classifying the input data to a positive class may result in some further processing operations related to the intended function of the classifier.

As used herein, the terms "positive" and negative" are not intended to limit example embodiments to classes using these labels. Other respective labels, such as "true" and "false", "1" and "0", and many others may be used. The term "positive" in this sense means that an output value falling within this class may cause triggering of one or more further processing operations that comprise an intended function of an apparatus or system. Additionally, or alternatively, classifying the input data to a negative class may result one or more other processing operations related to one or more other intended functions of the classifier.

For the avoidance of doubt, example embodiments encompass classifiers that may first classify input data into two classes (a binary classification task) or one of three (or more) labelled classes (a multi-class classification task.) Where there are two possible labelled classes, e.g. "correct" or "incorrect" then it follows that a "positive" classification may correspond to "correct" and a negative classification may correspond to "incorrect." In case of the two possible labelled classes, e.g., "class 1" and "class 2", a positive classification may be "class 1", such as "dog", and a negative classification maybe "class 2", such as "cat", or vice versa. Where there are three (or more) labelled classes, a classifier adapted for "positive" or "negative" classifications can still be used. For example, in image processing, input data representing an image of an animal may first be classified into one of three labelled classes, e.g. "dog", "cat" or "horse." In this context, in one formulation of the classifier disclosed herein, a positive classification may correspond to one of these labelled classes, e.g. "dog" and a negative classification may correspond to "not dog", i.e. covering the "cat" or "horse" labels. Other classifier formulations can be used for the other respective labelled classes, i.e. one where a positive classification may correspond to "cat" and the negative classification to "not cat", i.e. covering the "dog" or "horse" labels, and one where a positive classification may correspond to "horse" and the negative classification to "not horse. i.e.

covering the "dog" or "cat" labels". Each classifier formulation may have its own threshold value that can be updated or tuned according to example embodiments disclosed herein.

Classifiers are currently embedded in large numbers of real-world devices, including so-called Internet-of-Things (IoT) devices, which may include wearables such as heart monitors, smart watches and earphones, and/or a multitude of other personal, home and healthcare appliances such as mobile communication devices, smart speakers, etc. Input data to such classifiers may be received from one or more sensors on, or connected to, such devices, wherein a sensor is, for example, a microphone, a motion sensor, a camera, a gesture detection sensor, a touch sensor, a speed sensor, an acceleration sensor, a an IMU (inertial measurement unit), a GNSS (global navigation satellite system) receiver, a radio receiver/transmitter, etc. or any combination thereof. The input data may comprise digital representations of, for example, a user's voice, gesture, movement (e.g. falling, walking or running), temperature, heart rate, location and so on, or any combination thereof. An advantage of using embedded classifiers is that the input data can be processed in-situ, reducing privacy concerns and communications overhead.

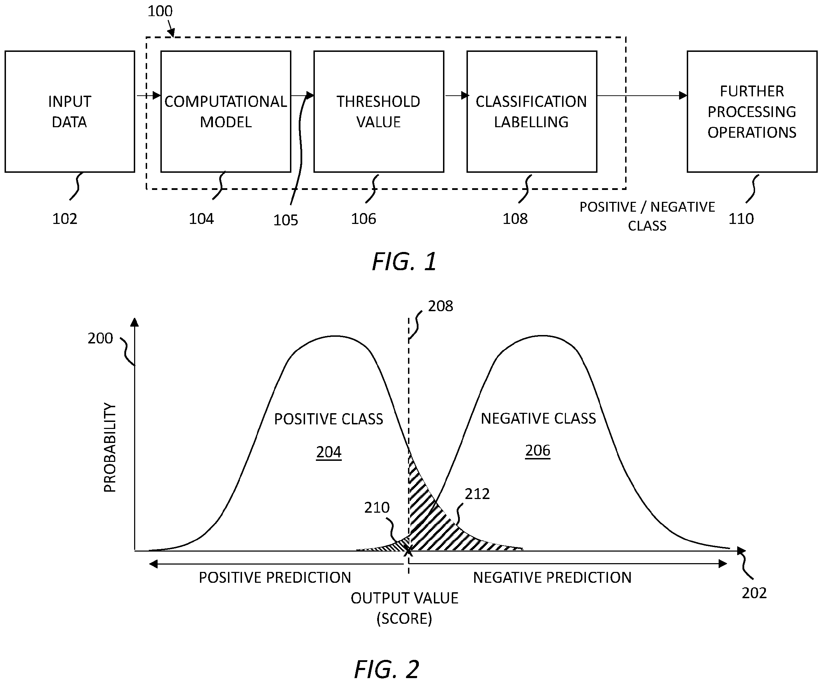

FIG. 1 shows an example architecture of a classifier 100 which may be useful for understanding example embodiments.

The classifier 100 may receive input data 102 from one or more data sources, e.g. one or more sensors which may form part of an apparatus in which the classifier 100 is embedded. Alternatively, the one or more sensors are separate from the apparatus but communicatively connected, such as via wireless or wireline connection, to it. A computational model 104, which may comprise any suitable form of computational model/analysis/algorithm, such as a trained neural network, may be configured to receive the input data 102 and to generate an output value 105 representing a prediction that the input data corresponds to at least a positive or negative class. The output value 105 may be compared to a threshold value 106 which is a value dividing a range of available output values of the computational model 104 into at least positive and negative classes. A classification labelling module 108 may label the input data 102, for a current time instance, as assigned to either a positive class or negative class based on which side of the threshold value 106 the output data falls on. One or more further processing operations 110 may result, at least from a positive classification, such as performing some intended function of an apparatus or system of which the classifier 100 forms part, or some other apparatus or system in communication with the classifier.

A practical example may be considered in the context of a voice-controlled digital assistant which comprises the above-described classifier 100. This is a mere example, and classifiers which take (as input data) data other than that representing a user's voice, such as any one or more of the above examples, may be used.

The classifier 100 may receive input data 102 in the form of a digital representation of a user's voice, i.e. a spoken utterance of one or more words, received by one or more microphones. The computational model 104 may generate an output value 105 which represents a score indicative of a probability that at least part of the utterance falls within a positive or negative class. This is determined by the threshold value 106. The output value 105 may be used, therefore, to detect whether the utterance comprises one or more wake commands for enabling the digital assistant, e.g. "hey assistant" or "hello assistant."

One can consider probability distributions associated with the range of available output values for the positive and negative classes, the probability distributions being distinct and partially separated. As such, by use of the threshold value 106, the classification labelling module 108 determines which of the positive and negative classes the input data 102 is assigned to, i.e. based on whether the output value is above or below the threshold. A positive classification of the input data, indicative in this example of the wake command being detected in the utterance, may result in one or more further processing operations 110 that the digital assistant is configured to perform.

The one or more further processing operations may include one or more of: responding to a query (e.g. "what time is it?", "what is the temperature in my home?", "how many kilometers have I run today?", and/or "what is my heart rate?") and/or controlling an electrical or electronic system (e.g. "turn on/off my central heating system", "turn on/off the ignition of my car", "lock/unlock my front door" and/or "turn on/off my bedroom lights in ten minutes. ")

Such query or control commands may be comprised in the same input data, i.e. as utterances that immediately follow the wake command utterance (e.g. "hey assistant, what time is it?"), or in follow-up input data received after the digital assistant signals it has been enabled by the wake command.

Classifiers may comprise part of stand-alone or multi-stage classifier process.

An example of a stand-alone classifier process is one where one classifier, or classification process is used to perform an intended function.

For example, an intended function, e.g. controlling an electrical or electronic system, may result from a positive classification being assigned to received input data by one classifier. For example, a positive classification may result from a particular utterance or gesture being received by a smart watch. Other utterances or gestures may result in a negative classification and the intended function is not then performed, although an error message may be issued by default.

An example of a multi-stage classifier process is one where multiple classifiers or classification processes are used, in series or in parallel, to perform an intended function.

For example, referring back to the voice-controlled digital assistant example, a first classifier may be used for assigning a positive or negative classification to an initial part of an utterance, for detecting the wake command, and a second classifier may be used for assigning a positive of negative classification to a subsequent part of the utterance, or a follow-up utterance.

FIG. 2 is a graph, indicative of probability distributions of positive and negative classes, which may be useful for understanding how the above-described threshold may be used to assign a positive or negative classification to received input data.

A vertical axis 200 of the graph represents probability and a horizontal axis 202 of the graph represents available output values, or scores, that may be produced by a computational model, such as the computational model 104 in FIG. 1. A first probability distribution 204 is shown for a positive class and a second probability distribution 206 is shown for a negative class. A threshold value 208, which may correspond to the threshold value 106 in FIG. 1, is preset at a given output value indicated by "X". Output values that fall to the left hand side of the threshold value 208 may be assigned by the classification labelling module 108 of FIG. 1 to the positive class whereas output values that fall to the right hand side of the threshold value may be assigned to the negative class. It will be seen that there is an area of overlap between the first probability distribution 204 and the second probability distribution 206. As such, for the given threshold value 208, some output values which fall within a first shaded region 210 may be incorrectly assigned to the positive class when, in fact, they belong to the negative class. This situation is referred to as a false positive classification. Similarly, some output values which fall within the second shaded region 212 may be incorrectly assigned to the negative class when, in fact, they belong to the positive class. This situation is referred to as a false negative classification.

Therefore, for a given threshold value, there will be an associated false positive rate (FPR) and false negative rate (FNR). For classifiers, or apparatuses comprising classifiers which have a fixed threshold value, i.e. a preset threshold value determined prior to deployment to end-users, this can result in a number of drawbacks that example embodiments may alleviate or avoid. For example, although a preset threshold value may be determined by manufacturers to perform well on average, i.e. for a potentially large number of end-users, it may not take into account specific characteristics of end-users and/or application contexts. As a result, a deployed classifier may perform badly for some end-users and/or application contexts, making it potentially discriminatory or unfair to some users and unreliable with the potential for random failures. This may have severe consequences for high-risk applications, such as a switching-on a critical device or calling emergency services.

Example embodiments may alleviate or avoid such drawbacks by way of determining that, based on a threshold value, a classification is a false classification and then, based on it being false, updating (or tuning) the threshold value.

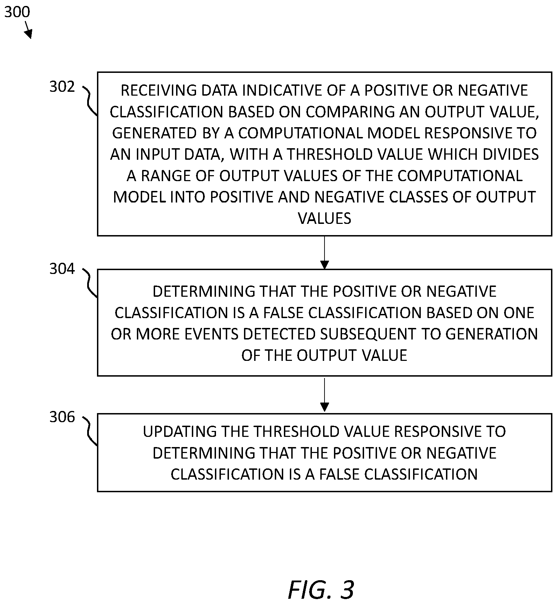

FIG. 3 is a flow diagram showing processing operations, indicated generally by reference numeral 300, according to example embodiments. The processing operations 300 may be performed in/by one or more means, for example, circuitry, hardware, software, firmware, or a combination thereof. For example, the processing operations may be performed by additional functionality within the classifier 100 shown in FIG. 1.

A first operation 302 may comprise receiving data indicative of a positive or negative classification based on comparing an output value, generated by a computational model responsive to an input data, with a threshold value which divides a range of output values of the computational model into positive and negative classes of output values, a positive or a negative classification being usable by the apparatus, or another apparatus, to trigger one or more processing operations.

A second operation 304 may comprise determining that the positive or negative classification is a false classification based on one or more events detected subsequent to generation of the output value.

A third operation 306 may comprise updating the threshold value responsive to determining that the positive or negative classification is a false classification.

Regarding the first operation 302, data indicative of the positive or negative classification may be received from part of a classifier configured to label, or assign, a current input value with a positive or negative classification, e.g. the classification labelling module 108 in FIG. 1. Thus, example embodiments are applicable to any form of classifier having the same, similar and/or equivalent architecture of that shown in FIG. 1, referenced by reference numeral 100.

As mentioned above, a positive classification is usable by the apparatus, such as any apparatus of which the classifier forms a part, or another apparatus (e.g. an IoT apparatus in communication with the apparatus of which the classifier forms a part) to trigger one or more processing operations, examples of which are given above.

Regarding the second operation 304, the one or more events detected subsequent to generation of the output value 105 (or the positive or negative classification based on the output value) may be any detectable event which may or may not relate to the triggered one or more processing operations. For example, the event may be based on a subsequent user interaction with the apparatus, a subsequent user interaction with another apparatus, or a lack of user interaction when expected, such as within a predetermined time period from generation of the output value 105.

In some example embodiments, detection of the one or more events may be based on feedback data indicative of the one or more events. For the avoidance of doubt, the absence of feedback data, e.g. within a predetermined time period, may still be indicative of an event.

For example, responsive to a positive classification, a false positive classification may be determined based on feedback data indicating a negative classification event associated with one or more further classification processes triggered by the positive classification, e.g. in a multi-stage classifier process. For example, taking the above voice-controlled digital assistant example, an utterance received subsequent to a positively-classified wake command utterance may be assigned a negative classification, e.g. it is not recognised by a subsequent classifier. In this case, the positively classified wake command may be determined in the second operation 304 as false, i.e. a false positive classification. This may also be the case if the feedback data is indicative of a negative interaction event, i.e. if no further input data or input data below a predetermined threshold (e.g. a partial or low-volume utterance) is received subsequent to generation of the output value.

For example, responsive to a negative classification, a false negative classification may be determined based on feedback data indicating a repeat interaction event associated with the computational model. For example, a repeat interaction event may be indicated if the computational model receives the same or similar input data to the previous input data within a predetermined time period subsequent to generation of the output value. For example, taking the above voice-controlled digital assistant example, a second utterance received subsequent to a negatively-classified first utterance, may result in the latter utterance being determined as false, i.e. a false negative classification, if the second utterance is substantially a repeat of the first utterance, i.e. the same or similar.

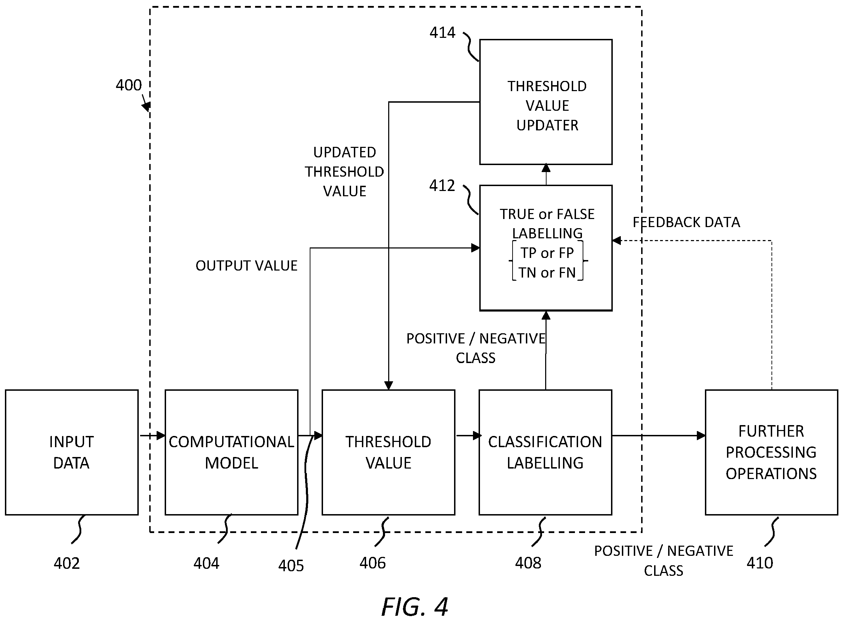

FIG. 4 is an example architecture of a classifier 400 according to some example embodiments. The processing of the classifier 400 is performed in/by one or more means, for example, circuitry, hardware, software, firmware, or a combination thereof.

The classifier 400 is similar to that shown in, and described with respect to, FIG. 1. The classifier 400 may receive input data 402 from one or more data sources, e.g. one or more sensors which may form part of an apparatus in which the classifier 400 is embedded. A computational model 404, which may comprise any suitable form of computational model, such as a trained neural network, may be configured to receive the input data 1402 and to generate an output value 405 representing a prediction that the input data corresponds to at least a positive or negative class. The output value 405 may be compared to a threshold value 406 which is a value dividing a range of available output values of the computational model 404 into at least positive and negative classes. A classification labelling module 408 may label the input data 402, for a current time instance, as assigned to either a positive class or negative class based on which side of the threshold value 406 the output data falls on. One or more further processing operations 410 may result, at least from a positive classification, such as performing some intended function of an apparatus or system of which the classifier 400 forms part, or some other apparatus or system in communication with the classifier.

A true or false labelling module 412 may be configured to receive the output value 405, the classification from the classification labelling module 408 and, optionally, feedback data that may relate to one or more further processing operations 410, although not necessarily so as will become clear. The true or false labelling module 412 may be configured to determine, using example tests mentioned above and/or below, whether the classification for the current output value 405 is a true or false classification. The determination may be passed to a threshold value updater 414. If false, the threshold value updater 414 may be configured to determine an updated threshold value which may update the threshold value 406 used in the next round or iteration of the classifier 400. If true, the threshold value 406 may remain the same.

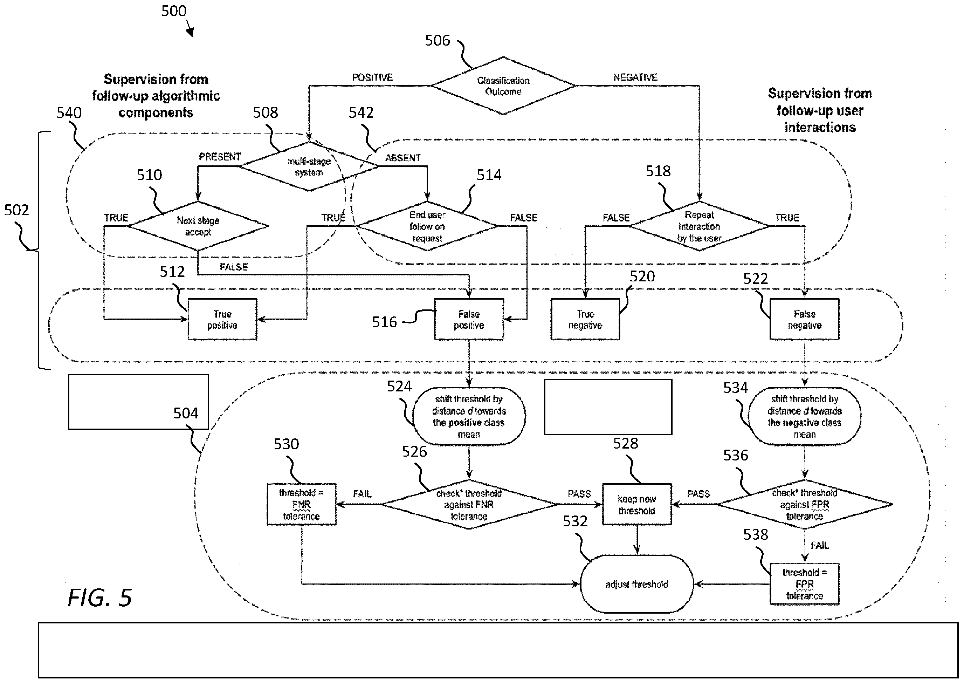

FIG. 5 is a flow diagram 500 for indicating how the true or false labelling module 412 and the threshold value updater 414 may operate according to some example embodiments.

A first, upper part 502 of the flow diagram indicates processes performed by the true or false labelling module 412.

A first operation 506 may comprise receiving a classification outcome, i.e. positive or negative, from the classification labelling module 408, for which see FIG. 4.

If positive, subsequent operations depend on whether the classifier 400 is part of a stand-alone or a multi-stage classification process. This is indicated by second operation 508 in which "PRESENT" indicates a multi-stage classification process and "ABSENT" indicates a stand-alone classification process.

If a multi-stage classification process, a third operation 510 determines if a next stage, i.e. one or more subsequent classification processes, results in a positive (TRUE) or negative (FALSE) classification. If positive (TRUE) then in a fourth operation 512, the true or false labelling module 412 assigns a TRUE POSITIVE label to the classification outcome. If negative (FALSE) then in a fifth operation 516, the true or false labelling module 412 assigns a FALSE POSITIVE label to the classification outcome.

As indicated by the dashed region 540, such operations indicate that the true or false labelling module 412 makes its determination based on supervision from follow-up algorithmic components as opposed to, for example, the result of user interactions subsequently received.

Returning to the second operation 508, if a stand-alone classification process is determined, in a sixth operation 514 the true or false labelling module 412 determines if there is or are one or more follow-on requests from the end user. If further input data is received from the end user, e.g. within a predetermined time period and/or above a predetermined threshold, then this may be indicative of a follow-on request. As in the fourth operation 512, this may result in assignment of a TRUE POSITIVE label because it signifies that the end-user continues to use the classifier 400. If no further input data is received from the end user, then this may be indicative of a negative interaction event and, as in the fifth operation 516, a FALSE POSITIVE label may be assigned to the classification outcome.

If the outcome from the first operation 506 is a negative outcome, then a sixth operation 518 may determine if there is a repeat interaction event associated with the computational model 404. For example, a repeat interaction event may be indicated if the computational model 404 receives the same or similar input data to the previous input data within a predetermined time period subsequent to generation of the output value 405. If the true or false labelling module 412 determines no repeat interaction event in the sixth operation 518, then a TRUE NEGATIVE label may be assigned to the classification outcome in a seventh operation 520. If there is a repeat interaction event in the sixth operation 517, a FALSE NEGATIVE label may be assigned to the classification outcome in an eighth operation 522.

As indicated by the dashed region 542, such operations indicate that the true or false labelling module 412 makes its determination based on supervision from follow-up user interactions.

In the case that a FALSE POSITIVE or FALSE NEGATIVE label is assigned by the true or false labelling module 412, the threshold value updater 414 may perform the operations indicated in a second, lower part 504 of the flow diagram.

The threshold value updater 414 may store its own internal threshold value, which may initially be the same as the current threshold value indicated by reference numeral 406, but is not necessarily the same because the nature of the updating process should adjust the current threshold value in the appropriate direction.

In general, for a FALSE POSITIVE label, as determined in the fifth operation 516, an updated threshold value may have a value within the positive class of output values. For a FALSE NEGATIVE classification, as determined in the eighth operation 522, the updated threshold value may have a value within the negative class of output values.

For example, the threshold value updater 414 may update its internal threshold value by a predetermined amount, or distance *d,* within the respective positive or negative classes, with a view to moving the threshold value towards the (unknown) mean of the relevant class.

For example, in respect of a FALSE POSITIVE label in the fifth operation 516, a ninth operation 524 may comprise the threshold value updater 414 shifting its internal threshold value by the predetermined amount *d* within the positive class. For example, in respect of a FALSE NEGATIVE label in the eighth operation 522, a tenth operation 534 may comprise the threshold value updater 414 shifting its internal threshold value by the predetermined amount *d* within the negative class.

Having updated the internal threshold value, the threshold value updater 414 may test if the modified threshold value satisfies a predetermined rule prior to actually updating the current threshold value 406 used by the classifier 400.

The predetermined rule may be based on predefined tolerance values respectively associated with the positive and negative classes. The predefined tolerance values may be stored by the threshold value updater 414.

For example, following on from the ninth operation 524, an eleventh operation 526 may comprise testing the modified threshold value, which has been moved within the positive class, against a predefined false negative tolerance value (FNR tolerance value). If the modified threshold value is within the FNR tolerance value, the test is considered a pass, and hence the modified threshold value may be used in a twelfth operation 528 to update the threshold value 406 in a thirteenth operation 532. If, in the eleventh operation 526, the modified threshold value is the same or goes beyond the FNR tolerance value, then the test is considered a fail, and a fourteenth operation 530 updates the threshold value 406 to that of the FNR tolerance value.

Similarly, a fifteenth operation 536 may comprise testing the modified threshold value, which has been moved within the negative class, against a predefined false positive tolerance value (FPR tolerance value). If the modified threshold value is within the FPR tolerance value, the test is considered a pass, and hence the modified threshold value may be used in the twelfth operation 528 to update the threshold value 406 in the thirteenth operation 532. If, in the fifteenth operation 536, the modified threshold value is the same or goes beyond the FPR tolerance value, then the test is considered a fail, and a sixteenth operation 538 updates the threshold value 406 to that of the FPR tolerance value.

In general, the predetermined rule may be satisfied, or a pass, if:

for a false positive classification:

$$(\text{FNR tolerance value} - k) * (\text{FNR tolerance value} - \text{modified threshold value}),$$

or
for a false negative classification

$$(\text{FPR tolerance value} - k) * (\text{FPR tolerance value} - \text{modified threshold value})$$

are positive values, where FNR tolerance value is a predefined first tolerance value within the positive class of output values, FPR tolerance value is a predefined second tolerance value within the negative class of output values and *k* is the current threshold value 406.

In some example embodiments, the predetermined amount *d* may be dynamically changeable based, at least in part, on the generated output value 405 of the computational model 404. For example, the predetermined amount *d* may be dynamically changeable based, at least in part, on the difference between the current threshold value 406 and the generated output value of the computational model. For example, the predetermined amount *d* may be dynamically changeable as:

$$d = \frac{|k - c|}{n}$$

where *k* is the current threshold value 406, c is the generated output value 405 of the computational model and n is a positive value. For example, *n* may be "2" but is not necessarily so. If *n* is "2", then this will move the updated threshold value halfway between the current threshold value 406 and the output value 405 of the computational model 404. A benefit of using a dynamic value for *d* is that it may lead to faster convergence to an optimal threshold value, although a benefit of using a fixed and relatively smaller value of *d* is that system performance will not fluctuate significantly as the threshold value converges to an optimal solution for the given end user and context.

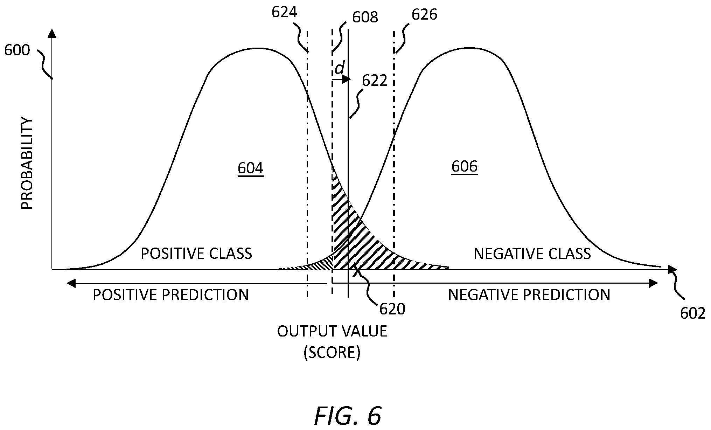

FIG. 6 is a graph, similar to that of FIG. 2, indicative of how the current threshold value 406 may be updated according to the above described example embodiments.

A vertical axis 600 of the graph represents probability and a horizontal axis 602 of the graph represents available output values, or scores, that may be produced by a computational model, such as the computational model 404 in FIG. 4. A first probability distribution 604 is shown for a positive class and a second probability distribution 606 is shown for a negative class. A threshold value 608, which may correspond to *k,* the current threshold value 406 in FIG. 4, is indicated as a dashed line. Assuming a new output value 620 which is classified as negative but determined to be a FALSE NEGATIVE according to the process described with respect to FIG. 5, an updated threshold value 622 is proposed by the threshold value updater 414 by shifting it by the amount *d* within the negative class 606. This is tested against a predefined value of false positive tolerance (FPR value) 626 and, because it does not equal or cross this value, the current threshold value 406 is updated to this updated threshold value 622. Had a new output value been classified as positive but determined to be a FALSE POSITIVE, the same test would be against a predefined value of false negative tolerance (FNR value) 624.

This process, and that of FIGs 3 and 5, may be repeated iteratively as further input data 405 is received and hence over time the threshold value 406 will update, based on current/new end-user and/or application context, and become more accurate.

Example embodiments therefore provide for updating classifiers, particularly the threshold value of classifiers, in a way that may improve performance whilst achieving a degree of personalization based on one or more of end-user and application context and which can be performed in-situ within a given apparatus after deployment by a manufacturer. The computational model and/or data labelling does not need changing per se, as updating is based on user actions and application context, which can apply to a wide range of applications.

Example embodiments may be performed at inference time use of the computational model 404 which forms a part of the classifier 400 but could be used during training time, e.g. to signal to a model developer that a computational model is not properly trained. A feedback loop can in this way be implemented as an output of the true or false labelling module 412, in case many FALSE POSITIVES or FALSE NEGATIVES are observed.

**Example Apparatus**

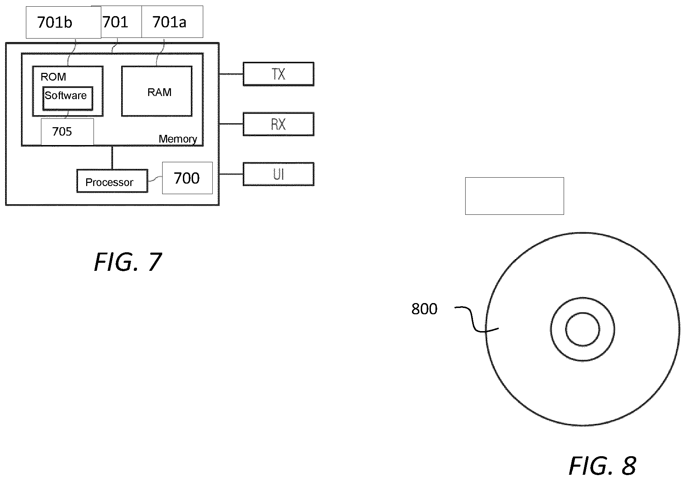

FIG. 7 shows an apparatus according to some example embodiments, which may comprise the classifier 400. The apparatus is, for example, a user equipment (UE), a mobile communication device, a handheld communication device, a wearable device, a smart watch, a still/video camera, a smart glasses, an AR (augmented reality) headset, a VR (virtual reality) headset, a TV set, a set-top box (STB), over-the-top (OTT) media service, an audio headset/earbuds, a smart speaker, a vehicle infotainment system, etc. or any combination thereof. Additionally or alternatively, the apparatus is, for example, a vehicle, wherein the classifier 400 is performed in/for adjusting various process in the vehicle, for example, a vehicle infotainment system, a smart speaker, an autonomous driving operation, etc. or any combination thereof. Additionally or alternatively, the apparatus is an IoT device/sensor, for example, a still/video camera, a microphone, a motion sensor, a camera, a gesture detection sensor, a touch sensor, a speed sensor, an acceleration sensor, a an IMU (inertial measurement unit), a GNSS (global navigation satellite system) receiver, a radio receiver/transmitter, etc. or any combination thereof. Additionally or alternatively, the apparatus is a server computer in a cloud or in edge-cloud, and is wirelessly or wired connected to the one or more apparatus as described above. The apparatus may be configured to perform the operations described herein, for example operations described with reference to any disclosed process.

The apparatus comprises at least one processor 700 and at least one memory 701 directly or closely connected to the processor. The memory 701 includes at least one random access memory (RAM) 701a and at least one read-only memory (ROM) 701b. One or more computer program code (software) 705 is stored in the ROM 701b. The apparatus may be connected to one or more transmitter (TX) and receiver (RX), and wireline communication interface. The apparatus may, optionally, be connected with a user interface (UI) for instructing the apparatus and/or for outputting data. The at least one processor 700, with the at least one memory 701 and the computer program code 705 are arranged/configure to cause the apparatus to at least perform at least the method according to any preceding process, for example as disclosed in relation to the flow diagrams of FIGs 3 and/or 5 and related features thereof.

It is contemplated that the functions of the components of the classifier 400 as described above may be combined or performed by other components of equivalent functionality. The above presented components can be implemented in circuitry, hardware, firmware, software, or a combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

FIG. 8 shows a non-transitory media 800 according to some embodiments. The non-transitory media 800 is a computer readable storage medium. It may be e.g. a CD, a DVD, a USB stick, a blue ray disk, etc. The non-transitory media 800 stores computer program code, causing an apparatus to perform the method of any preceding process for example as disclosed in relation to the flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G/6G telecommunication networks and further generations of 3GPP but also in non-3GPP radio networks such as short-range wireless communication networks, for example, a wireless local area network (WLAN), Bluetooth®, or optical wireless communication network. Additionally or alternatively, the embodiments may be deployed in one or more wired communication networks.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud. Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

**Claims**

1. An apparatus, comprising:

   means for receiving data indicative of a positive or negative classification based on comparing an output value, generated by a computational model responsive to an input data, with a threshold value which divides a range of output values of the computational model into positive and negative classes of output values, a positive or a negative classification being usable by the apparatus, or another apparatus, to trigger one or more processing operations;
   means for determining that the positive or negative classification is a false classification based on one or more events detected subsequent to generation of the output value; and
   means for updating the threshold value responsive to determining that the positive or negative classification is a false classification
   wherein the updating means is configured such that:

   for a false positive classification, the updated threshold value has a value within the positive class of output values; or
   for a false negative classification, the updated threshold value has a value within the negative class of output values,
   wherein the updating means is configured to modify the threshold value by a predetermined amount $d$ within the respective positive or negative classes of output values and to use the modified threshold value as the updated threshold value if the modified threshold value satisfies a predetermined rule, wherein the predetermined amount $d$ is dynamically changeable based, at least in part, on the generated output value of the computational model.

2. The apparatus of claim 1, wherein the means for determining a false classification is configured to determine the false classification based on feedback data indicative of the one or more events detected subsequent to generation of the output value.

3. The apparatus of claim 2, wherein, responsive to a positive classification, a false classification is determined based on the feedback data indicating a negative classification event associated with one or more further classification processes triggered by the positive classification.

4. The apparatus of claim 2 or claim 3, wherein, responsive to a positive classification, a false classification is determined based on the feedback data indicating a negative interaction event associated with the computational model.

5. The apparatus of claim 4, wherein a negative interaction event is indicated by the feedback data if no input data, or input data below a predetermined threshold, is received by the computational model within a predetermined time period subsequent to generation of the output value.

6. The apparatus of any of claims 2 to 5, wherein, responsive to a negative classification, a false classification is determined based on the feedback data indicating a repeat interaction event associated with the computational model.

7. The apparatus of claim 6, wherein a repeat interaction event is indicated by the feedback data if the computational model receives the same or similar input data to the previous input data within a predetermined time period subsequent to generation of the output value.

8. The apparatus of any preceding claim, wherein the predetermined rule is satisfied if:

   for a false positive classification:

$$(\text{FN tolerance value} - k) * (\text{FN tolerance value} - \text{modified threshold value}),$$

or

for a false negative classification

$$(\text{FP tolerance value} - k) * (\text{FP tolerance value} - \text{modified threshold value})$$

is a positive value, where FN tolerance value is a predefined first tolerance value within the positive class of output values, FP tolerance value is a predefined second tolerance value within the negative class of output values and *k* is the threshold value.

9.  The apparatus of claim 8, wherein the updating means is configured, responsive to the predetermined rule not being satisfied:

    for a false positive classification, to use FN tolerance value as the updated threshold value; or
    for a false negative classification, to use FP tolerance value as the updated threshold.

10. The apparatus of claim 12, wherein the predetermined amount *d* is dynamically changeable based, at least in part, on the difference between the threshold value and the generated output value of the computational model.

11. The apparatus of claim 10, wherein the predetermined amount *d* is dynamically changeable as:

$$d = \frac{|k - c|}{n}$$

    where *k* is the threshold value, *c* is the generated output value of the computational model and *n* is a positive value.

12. The apparatus of any preceding claim, wherein the apparatus comprises at least part of a digital assistant, wherein the computational model is configured to receive input data representing a user utterance and/or gesture and to generate an output value indicative of whether the utterance and/or gesture corresponds to a wakeup command for the digital assistant, a positive classification being usable to trigger one or more processing operations for performance by the digital assistant.

13. The apparatus of any preceding claim, wherein the apparatus comprises the computational model and one or more sensors for providing the input data to the computational model.

14. The apparatus of any preceding claim, wherein the means comprises:

    at least one processor; and
    at least one memory including computer program code, the at least one memory and computer program code configured to, with the at least one processor, cause performance of the apparatus.

15. A computer implemented method, the method comprising:

    receiving data indicative of a positive or negative classification based on comparing an output value, generated by a computational model responsive to an input data, with a threshold value which divides a range of output values of the computational model into positive and negative classes of output values, a positive or negative classification being usable by the apparatus, or another apparatus, to trigger one or more processing operations; determining that the positive or negative classification is a false classification based on one or more events detected subsequent to generation of the output value; and
    updating the threshold value responsive to determining that the positive or negative classification is a false classification,
    wherein updating the threshold value is such that:

    for a false positive classification, the updated threshold value has a value within the positive class of output values; or
    for a false negative classification, the updated threshold value has a value within the negative class of output values,

wherein updating the threshold value comprises modifying the threshold value by a predetermined amount $d$ within the respective positive or negative classes of output values and to use the modified threshold value as the updated threshold value if the modified threshold value satisfies a predetermined rule, wherein the predetermined amount $d$ is dynamically changeable based, at least in part, on the generated output value of the computational model.

*FIG. 1*

*FIG. 2*

EP 4 213 076 A1

302  RECEIVING DATA INDICATIVE OF A POSITIVE OR NEGATIVE CLASSIFICATION BASED ON COMPARING AN OUTPUT VALUE, GENERATED BY A COMPUTATIONAL MODEL RESPONSIVE TO AN INPUT DATA, WITH A THRESHOLD VALUE WHICH DIVIDES A RANGE OF OUTPUT VALUES OF THE COMPUTATIONAL MODEL INTO POSITIVE AND NEGATIVE CLASSES OF OUTPUT VALUES

304  DETERMINING THAT THE POSITIVE OR NEGATIVE CLASSIFICATION IS A FALSE CLASSIFICATION BASED ON ONE OR MORE EVENTS DETECTED SUBSEQUENT TO GENERATION OF THE OUTPUT VALUE

306  UPDATING THE THRESHOLD VALUE RESPONSIVE TO DETERMINING THAT THE POSITIVE OR NEGATIVE CLASSIFICATION IS A FALSE CLASSIFICATION

*FIG. 3*

EP 4 213 076 A1

*FIG. 4*

EP 4 213 076 A1

500

Supervision from follow-up algorithmic components  540

Supervision from follow-up user interactions

506 — Classification Outcome

POSITIVE / NEGATIVE

508 — multi-stage system
PRESENT / ABSENT

510 — Next stage accept
TRUE / FALSE

512 — True positive

542

514 — End user follow on request
TRUE / FALSE

518 — Repeat interaction by the user
FALSE / TRUE

516 — False positive

520 — True negative

522 — False negative

502

504

524 — shift threshold by distance d towards the positive class mean

526 — check* threshold against FNR tolerance
PASS / FAIL

528

530 — threshold = FNR tolerance

532 — keep new threshold
PASS

534 — shift threshold by distance d towards the negative class mean

536 — check* threshold against FPR tolerance
PASS / FAIL

538 — threshold = FPR tolerance

adjust threshold

*FIG. 5*

18

FIG. 6

EP 4 213 076 A1

701b | 701 | 701a

ROM
Software
705

RAM

Memory

Processor

700

TX

RX

UI

**FIG. 7**

800

**FIG. 8**

Europäisches
Patentamt
European
Patent Office
Office européen
des brevets

# EUROPEAN SEARCH REPORT

**Application Number**

EP 22 21 6350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/077794 A1 (KIM YOON [US] ET AL) 17 March 2016 (2016-03-17) * Paragraphs [0002, 0006, 0017, 0018, 0020, 0028, 0029, 0043, 0051, 0063, 0075, 0079-0081]; claims 1, 18; figures 1, 2 * | 1-15 | INV. G06N3/09 G06N5/01 G06F3/16 G10L15/08 G10L25/51 |
| X | WO 2021/091573 A1 (GOOGLE LLC [US]) 14 May 2021 (2021-05-14) * Paragraphs [0001-0003, 0009, 0010, 0013, 0016, 0026, 0027, 0030, 0038]; figure 6 * | 1-15 | |

**TECHNICAL FIELDS SEARCHED (IPC)**

G06N
G06F
G10L

The present search report has been drawn up for all claims

| Place of search | Date of completion of the search | Examiner |
|---|---|---|
| The Hague | 21 April 2023 | Tidriri, Khaoula |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 6350

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2023

| Patent document cited in search report | | Publication date | Patent family member(s) | | Publication date |
|---|---|---|---|---|---|
| US 2016077794 | A1 | 17-03-2016 | AU | 2015315702 A1 | 16-03-2017 |
| | | | AU | 2018241137 A1 | 25-10-2018 |
| | | | CN | 106796497 A | 31-05-2017 |
| | | | EP | 3192072 A1 | 19-07-2017 |
| | | | JP | 6466565 B2 | 06-02-2019 |
| | | | JP | 6720359 B2 | 08-07-2020 |
| | | | JP | 2017537361 A | 14-12-2017 |
| | | | JP | 2019091472 A | 13-06-2019 |
| | | | TW | 201629750 A | 16-08-2016 |
| | | | US | 2016077794 A1 | 17-03-2016 |
| | | | WO | 2016039992 A1 | 17-03-2016 |
| WO 2021091573 | A1 | 14-05-2021 | CN | 114651228 A | 21-06-2022 |
| | | | EP | 3841459 A1 | 30-06-2021 |
| | | | JP | 2023500048 A | 04-01-2023 |
| | | | KR | 20220088926 A | 28-06-2022 |
| | | | US | 2021327421 A1 | 21-10-2021 |
| | | | WO | 2021091573 A1 | 14-05-2021 |

EPO FORM P0459

For more details about this annex : see Official Journal of the European Patent Office, No. 12/82